(19) Europäisches Patentamt
European Patent Office
Office européen des brevets

(11) Veröffentlichungsnummer : **0 130 499**
**B1**

(12) # EUROPÄISCHE PATENTSCHRIFT

(45) Veröffentlichungstag der Patentschrift : **16.06.87**

(51) Int. Cl.[4] : **C 02 F 3/22**, C 12 M 1/08

(21) Anmeldenummer : **84107157.4**

(22) Anmeldetag : **22.06.84**

(54) **Gerät zur biologischen Abwasserreinigung.**

(30) Priorität : **30.06.83 DE 3323514**

(43) Veröffentlichungstag der Anmeldung : **09.01.85 Patentblatt 85/02**

(45) Bekanntmachung des Hinweises auf die Patenterteilung : **16.06.87 Patentblatt 87/25**

(84) Benannte Vertragsstaaten : **AT BE CH DE FR GB IT LI LU NL SE**

(56) Entgegenhaltungen :
**EP-A- 0 003 547**
**DE-A- 1 557 018**
**FR-A- 2 326 384**
**US-A- 4 207 180**
**US-A- 4 308 221**

(73) Patentinhaber : **Menges, Martin, Dipl.-Ing.**
**Gusternhainer Strasse 13**
**D-6349 Breitscheid-Gusternhain (DE)**

(72) Erfinder : **Menges, Martin, Dipl. Ing.**
**Gusternhainer Strasse 13**
**D-6349 Breitscheid-Gusternhain (DE)**
Erfinder : **Räbiger, N. Dr. Ing.**
**Gosslarschestrasse 1**
**D-3392 Clausthal-Zellerfeld (DE)**

**EP 0 130 499 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Gerät zur biologischen Abwasserreinigung gemäß dem Oberbegriff des Patentanspruches 1.

Die biologische Reinigung des Abwassers dient zur Abscheidung organischer Schadstoffe, die von Mikroorganismen unter Verwendung von Sauerstoff in unschädliche Stoffe umgewandelt werden. Die ursprünglich zu diesem Zweck eingesetzten Rieselfelder und auch das heute weitgehend eingesetzte Belebtschlammverfahren erfüllen die durch die rasch fortschreitende Entwicklung der Ballungsgebiete bedingten erhöhten Anforderungen nicht mehr. Die angestrebte hohe Reinigungsleitung sowie die notwendige Vermeidung von Geruchs- und Lärmbelästigungen erzwingen Lösungen, bei denen der zugeführte Sauerstoff intensiver ausgenutzt wird.

In der DE-OS 31 08 629 wird eine Abwasser-Aufbereitungsanlage beschrieben, bei welcher in einem vertikalen zylindrischen Außenrohr mit einem inneren Strömungsleitrohr das Abwasser mittels einer Pumpe umgewälzt wird. Dabei wird das abgepumpte Abwasser dem inneren Strömungsleitrohr, welches das Flüssigkeitsniveau der Aufwärtsstromkammer überragt, von oben zugeführt. Außerdem wird über ein Gebläse in das Strömungsleitrohr sauerstoffhaltiges Gas eingespeist. Um die Lösungsfähigkeit des Abwassers für Sauerstoff zu erhöhen, sollen die beiden, die Umwälzkammern bildenden Außen- und Innenrohre bis zu einer Tiefe von 100 m führen. Hieraus ist ersichtlich, welche Dimensionen eine solche Anlage aufweist. Weil es sich um eine offene Anlage handelt, sind Geruchsbelästigungen nicht auszuschließen.

Die als geschlossenes Reaktorgefäß ausgebildeten Geräte, wie sie in der chemischen Industrie eingesetzt werden, z. B. für Fermentationsprozesse (DE-OS 31 03 681), sind in den bekannten Konstruktionen nicht auf die Abwasserreinigung übertragbar, weil die Einflüsse, welche von den Mikroorganismen ausgehen, nicht berücksichtigt sind.

Aus EP-A-0 003 547 ist ein geschlossener Reaktor zur biologischen Abwasserreinigung bekannt, der ein inneres Strömungsrohr aufweist, in das mittels einer Düse Abwasser und Luft eingebracht wird.

Aus FR-A-2 326 384 ist es ferner bekannt, mittels einer Triebstrahldüse Abwasser zu belüften und in ein offenes Becken einzutragen.

Es ist auch gemäß DE-A-1 557 018 bekannt, Triebstrahldüsen in Reaktoren zum Vermischen von Gasen und Flüssigkeiten zu verwenden.

Die mikrobielle Umsetzung kann in folgender Gleichung ausgedrückt werden :

$$\text{organ. Schadstoffe} + O_2 \xrightarrow{\text{Bakterien}} CO_2 + H_2O + \text{Zellsubstanz}$$

Bei hoch- und höchstbelasteten Abwässern ist in herkömmlichen Anlagen ein merklicher Anteil an Schadstoffen nicht mikrobiell abbaubar, so daß kostspielige und aufwendige Reinigungsstufen angeschlossen werden müssen, z. B. durch adsorptive Bindung der Schadstoffe oder durch chemische Umwandlung. Für neuzeitliche Anlagen wird aber ein geringes Bauvolumen bei niedrigem Grundflächenbedarf, eine emissionsdichte Bauweise sowie eine hohe betriebliche Flexibilität und hohe Sauerstoffausnutzung gefordert.

Der vorliegenden Erfindung liegt die Aufgabe diese Anforderungen in optimaler Weise zu erfüllen. Erfindungsgemäß wird diese Aufgabe mit den im kennzeichnenden Teil des Patentanspruchs 1 angegebenen Merkmalen gelöst.

Der Eintrag von Abwasser und sauerstoffhaltigem Gas in das unter dem Flüssigkeitsniveau angeordnete mittige Strömungsleitrohr mittels einer Triebstrahldüse, durch deren Düsenaustrittsquerschnitt ein mit Sauerstoff versorgtes Einsteckrohr geführt ist, bewirkt eine Vermischung von Bakterienmasse und Sauerstoff in einem nicht für möglich gehaltenen Ausmaß. Bekanntlich hängt der Abbau organischer Schadstoffe durch Bakterien bei vorgegebener Masse an Bakterien entscheidend von der Größe der vorhandenen Bakterienagglomerate ab, denn der Übergang für den Sauerstoff aus den feinverteilten Luftbläschen an die Bakterien ist umso besser, je feiner die Bakterien in der Flüssigkeit verteilt sind bzw. je größer die zur Verfügung stehende Oberfläche der Bakterienagglomerate ist. Mit dem Reaktor gemäß der Erfindung wird ein bis zu 70 x schnellerer Abbau gegenüber üblichen Belebungsbecken erreicht, so daß man mit einem entsprechend kleineren Volumen- und Flächenbedarf auskommt. Außerdem wird eine geschlossene Bauweise ermöglicht, wodurch Geruchsbelästigungen vermieden werden.

In der Zeichnung sind Ausführungsbeispiele und weitere Merkmale der Erfindung dargestellt.

Es zeigen :

Figur 1 einen senkrechten Schnitt durch den Reaktor

Figur 2 die Triebstrahldüse in größerer Darstellung

Figur 3 eine aus zwei hintereinander geschalteten Reaktoren bestehende Einheit

Der Kompaktreaktor besteht aus dem aufrecht stehenden äußeren zylindrischen Mantel 1, welcher mit Abstand das im Inneren angeordnete Strömungsleitrohr 2 umgibt.

Das Verhältnis des Durchmessers des äußeren Mantels (1) zu dem des Strömungsleitrohres (2) beträgt vorzugsweise etwa 3 : 1 bis 5 : 1. Das oberhalb des Gehäusebodens 3 und unterhalb des durch

den Überlauf 4 bestimmten Flüssigkeitsniveaus 5 endende Strömungsleitrohr 2 hat die Aufgabe, das von der Triebstrahldüse 6 zugeführte Abwasser-Gas-Gemisch durch das Strömungsleitrohr nach unten zuführen und von der außen wieder hochsteigenden Säule zu trennen. Der Triebstrahldüse 6 wird Abwasser über die Pumpe 7 und die Zirkulationsleitung 8 zugeführt, welches bei 9 unten aus dem Reaktor entnommen wird. Die Pumpe 7 kann auch als Tauchpumpe ausgebildet und im Reaktorgehäuse angeordnet sein. Der Abwasserzulauf 10 von der Vorreinigungsstufe ist unten vor der Saugseite der Pumpe 7 angebracht, während sich der Überlauf 4 zur Nachreinigungsstufe oben am Reaktorgehäuse befindet, so daß sich oberhalb des Überlaufs 4 ein Gassammelraum 11 bildet. Durch die Triebstrahldüse 6, welche bis in den oberen Bereich des Strömungsleitrohres 2 ragt ist mittig ein Einsteckrohr 12 durch den Düsenaustrittsquerschnitt 13 geführt, welches mit einem sauerstoffhaltigen Gas, z. B. mit der Außenluft in Verbindung steht. Der aus der Triebstrahldüse 6 austretende Abwasserstrahl saugt über das mittige und den Düsenaustrittsquerschnitt 13 radial freilassende Einsteckrohr 12, das bis in den Unterdrückbereich der Triebstrahldüse reicht, Luft oder ein anderes Gas an (Injektor- bzw. Ejektorprinzip), wodurch eine äußerst feine Luftbläschenbildung eintritt und außerdem diese Luftbläschen mit der Bakterienmasse innigst vermischt werden. Vorzugsweise ragt das Einsteckrohr (12) aus dem Düsenaustrittsquerschnitt (13) um das 0.4- bis 6-fache des Düsendurchmessers heraus. Die Bakterienagglomerate werden beim Passieren der Triebstrahldüse auseinandergerissen und es wird ein nicht für möglich gehaltener intensiver Schadstoffabbau auf kleinstem Raum erreicht. Je nach Art des verwendeten Abwassers erfolgt ein 20-100 ml mal schnellerer Abbau als in herkömmlichen Anlagen. Außer der Dispergierung der durch das Einstreckrohr 12 angesaugten Primärluft erfolgt nämlich auch eine Sekundärdispergierung der mit dem Abwasser im Reaktor zirkulierenden Luftblasen, welche bei der Rückführung oben wieder in den Bereich der Triebstrahldüse gelangen. Die Umlenkplatte 14 oberhalb der Entnahmeöffnung am Gehäuseboden 3 erleichtert die Zirkulation des unten aus dem Strömungsleitrohr 2 austretenden Abwasser-Luft-Gemisches — wie durch die Pfeile angedeutet ist — zurück zum oberen offenen Ende des Strömungsleitrohres 2, um dort die gewünschte Sekundärdispergierung der zirkulierenden Luftblasen herbeizuführen. In Fig. 2 ist schematisch angedeutet, wie die seitlich der Triebstrahldüse 6 zuströmenden Luftblasen im Unterdruckbereich in viele kleine Luftblasen aufgeteilt werden.

Die im oberen Gassammelraum 11 angesammelten leichtflüchtigen und schädlichen Kohlenstoffverbindungen können über einen Filter 15 geleitet und von diesem ab- bzw. adsorbiert werden. Außerdem wirkt bei Ansaugung aus dem Sammelraum der Reaktorinhalt als Biofilter.

Vorzugsweise liegt das Flüssigkeitsniveau etwa in einer dem Durchmesser des Strömungsleitrohres (2) entsprechenden Höhe über dem oberen Ende des Strömungsleitrohres (2). Der oberhalb des Flüssigkeitsniveaus (5) sich befindende Gassammelraum (11) für die leichtflüchtigen Kohlenstoffverbindungen weist dabei mindestens eine Höhe auf, welche dem halben Durchmesser des äußeren Mantels (1) entspricht.

Neben der Erhöhung der Abbauleistung gegenüber konventionellen Anlagen zeigt sich bei erfindungsgemäßen Reaktor noch ein zusätzlicher Effekt und zwar wird durch die beschriebene Aktivierung der Bakterien im Scherfeld der Triebstrahldüse eine bessere Sedimentation erreicht. Bei allen bisher untersuchten Abwasserarten ergab sich ein Schlammindex von $ISV < 50$ ml/g, so daß die Sedimentationsbecken bei Verwendung des erfindungsgemäßen Reaktors problemlos mit einer Oberflächenbeschickung von $1 \leq q_v \leq 8$ $m^3/m^2h$ betrieben werden können.

Damit kann auch bei den nachgeschalteten Reinigungsstufen der Grundflächendarf wesentlich reduziert werden.

Als wesentlicher Vorteil für den erfindungsgemäßen Reaktor ist neben den wesentlichen reduzierten Investitionskosten noch der reibungslose Winterbetrieb zu erwähnen, da auf Grund der kompakten Bauweise und der hohen Energiedissipation von $E/V \leq 2$ $kW/m^3$ eine Temperaturabsenkung im Belebungsteil nicht auftritt.

In Fig. 3 ist ein Doppelanlage gezeigt, bei welcher außerdem das sich oben im Reaktorgehäuse ansammelnde Gas wieder dem Abwasser zugemischt werden kann.

Das vom mechanischen Vorreiniger kommende Abwasser wird bei 16 der Zirkulationsleitung 8 des ersten Reaktors zugeführt und in der vorher beschriebenen Weise behandelt. Sollte es sich dabei um ein besonders hochbelastetes Abwasser handeln und die Reinigung nicht ausreichend sein, wird aus dem ersten Reaktor das Abwasser über die Zwischenleitung 17 dem zweiten Reaktor zugeführt und dort in einer zweiten Stufe behandelt. In der selben Weise könnte eine weitere Stufe nachgeschaltet werden. Zur Umwälzung dienen in diesem Ausführungsbeispiel die Pumpen 18. Das biologisch gereinigte Abwasser wird über die Ableitung 19 zu einer nachgeschalteten Sedimentationsstufe geleitet, wo die Bakterienmasse vom gereinigten Abwasser getrennt wird. Zur Impfung der Reaktoren mit Biomasse wird im Bedarfsfalle aus der Sedimentationsstufe ein Teil Biomasse über die Rückleitung 20 rückgeführt. Der Überlauf 4' des zweiten Reaktors ist tiefer angeordnet als der Überlauf 4 des ersten Reaktors, so daß ein natürliches Gefälle zwischen den beiden Reaktoren gegeben ist.

Die sich in den oberen Gassammelräumen 11 und 11' ansammelnden schädlichen Gase können dadurch reduziert werden, indem sie über die Rohrleitungen 21 und 21' im Bedarfsfalle an das Einsteckrohr 12 bzw. 12' angeschlossen und damit dem angesaugten Luftstrom zugeführt werden. Die Ventile 22, 23 und 24 erlauben eine beliebige Lenkung dieser Gase. So können beispielsweise auch die im

ersten Reaktor entstehenden Gase dem zweiten Reaktor über die Ausgleichsleitung 25 zugeführt werden und umgekehrt. Schädliche Restgase können durch im Gassammelraum 11 angeordnete Absorptionseinrichtungen 26 entfernt werden.

Im Regelfalle reicht jedoch schon die Biofiltration des Reaktorinhaltes aus.

**Patentansprüche**

1. Gerät zur biologischen Abwasserreinigung, bestehend aus einem geschlossenen Reaktorgefäß, welches vertikal und konzentrisch mit Abstand zueinander angeordnet einen äußeren Mantel und ein inneres Strömungsleitrohr, sowie am äußeren Mantel einen das Flüssigkeitsniveau und den oberen Gassammelraum bestimmenden Überlauf aufweist, wobei dem inneren, oberhalb des Reaktorgehäusebodens und unterhalb des Flüssigkeitsniveaus endenden Strömungsleitrohr Abwasser sowie ein sauerstoffhaltiges Gas über eine Düse zugeführt wird, dadurch gekennzeichnet, daß aus dem geschlossenen Reaktorgefäß Bakterienmasse enthaltendes Abwasser entnommen und mittels einer Pumpe (7) wieder in der oberen Bereich des Strömungsleitrohres (2) von oben über eine Triebstrahldüse (6) eingeleitet wird, durch deren Düsenaustrittsquerschnitt (13) mittig mit Abstand ein Einsteckrohr (12) geführt ist, das bis in den Unterdrückbereich der Triebstrahldüse (6) reicht und das mit einem sauerstoffhaltigen Gas enthaltenden Raum in Verbindung steht.

2. Gerät nach Anspruch 1 oder 2, dadurch gekennzeichnet, daß das Einsteckrohr (12) aus dem Düsenaustrittsquerschnitt (13) um das 0,4 bis 6-fache des Düsendurchmessers herausragt.

3. Gerät nach einem der Ansprüche 1 bis 4, dadurch gekennzeichnet, daß das Verhältnis vom Durchmesser des äußeren Mantels (1) zu dem des Strömungsleitrohres (2) etwa 3 : 1 bis 5 : 1 beträgt.

4. Gerät nach einem der Ansprüche 1 bis 5, dadurch gekennzeichnet, daß das Flüssigkeitsniveau (5) etwa in einer dem Durchmesser des Strömungsleitrohres (2) entsprechenden Höhe über dessen oberem Ende liegt und der oberhalb des Flüssigkeitsniveaus (5) sich befindende Gassammelraum (11) für die leichtflüchtigen Kohlenstoffverbindungen mindestens eine Höhe aufweist, welche dem halben Durchmesser des äußeren Mantels entspricht.

5. Gerät nach einem der Ansprüche 1 bis 6, dadurch gekennzeichnet, daß der Gassammelraum (11) wahlweise über eine absperrbare Leitung an das Einsteckrohr (12) der Triebstrahldüse (6) anschließbar ist.

6. Gerät nach einem der Ansprüche 1 bis 7, dadurch gekennzeichnet, daß bei der Hintereinanderschaltung mehrerer Reaktoren deren Gassammelräume (11) über eine absperrbare Ausgleichsleitung miteinander in Verbindung stehen.

7. Gerät nach einem der Ansprüche 1 bis 8, dadurch gekennzeichnet, daß dem Gassammelraum (11) ein Filter (14) zur Absorption schädlicher Gase nachgeschaltet ist.

8. Gerät nach einem der Ansprüche 1 bis 9, dadurch gekennzeichnet, daß im Gassammelraum eine Absorptionseinrichtung für schädliche Gase angeordnet ist.

**Claims**

1. Device for biological waste water treatment, comprising a closed reactor vessel presenting in spaced vertical and concentric relation to each other an outer shell and an inner flow conduit pipe, and presenting an overflow determining the liquid level and the upper gas collecting space at the outer shell to the inner flow conduit pipe terminating above the reactor body bottom and below the liquid level, waste water and an oxygen-containing gas over a nozzle being added, characterized by that from the closed reactor vessel, bacteria containing waste water is removed and is led back by means of a pump (7) into the upper area of the flow conduit pipe (2) from above over a jet nozzle (6), through the nozzle outlet section (13) of which a slip-in pipe (12) being arranged centrally and in spaced relationship, said pipe (6) extending into the underpressure area of the jet nozzle (6) and being in connection with an area containing oxygen-containing gas.

2. Device according to claim 1, characterized by that the slip-in pipe (12) protrudes out of the nozzle outlet section (13) by approx. 0.4 to 6 times the nozzle diameter.

3. Device according to one of claims 1 or 2, characterized by that the ratio of the diameter of the outer shell (1) to that of the flow conduit pipe (2) is approximately 3 : 1 to 5 : 1.

4. Device according to one of claims 1 to 3, characterized by that the liquid level (5) is arranged in a height approximately corresponding to the diameter of the flow conduit pipe (2) above its upper end, and that the gas collecting space (11) for the highly volatile hydrocarbons, said space being arranged above the liquid level (5), presents at least a height corresponding to half the diameter of the outer shell.

5. Device according to one of claims 1 to 4, characterized by that the gas collecting space (11) is alternatively connectable over a shuttable conduit line to the slip-in pipe (12) of the jet nozzle (6).

6. Device according to one of claims 1 to 5, characterized by that, in case several reactors are connected in series, their gas collecting spaces (11) are connected to each other over a shuttable compensation conduit line.

7. Device according to one of claims 1 to 6, characterized by that a filter (14) for absorption of damaging gases is connected downstream the gas collecting space (11).

8. Device according to one of claims 1 to 7, characterized by that an absorption device for damaging gases is arranged within the gas collecting space.

**Revendications**

1. Appareil pour le traitement biologique d'eau usée, comprenant un vase de réacteur fermé, qui présente verticalement et séparément de l'un à l'autre une enveloppe extérieure et un tube directeur intérieur d'écoulement et à l'enveloppe extérieure un débordement réglant le niveau du liquide et le compartiment supérieur collecteur du gaz, au tube directeur intérieur d'écoulement se terminant au-dessus du fond du boîtier du réacteur et au-dessous du niveau du liquide, de l'eau usée et un gaz oxygénifère sur une tuyère étant introduits, caractérisé en ce que du vase de réacteur fermé, de l'eau usée contenant des bactéria est soutirée et est introduite de nouveau par une pompe (7) dans la zone supérieure du tube directeur (2) d'écoulement d'en haut sur une tuyère éjecteur (6), à travers de la sortie de laquelle (13) un tube enfichable étant guidé centralement et séparément, qui s'étend jusqu'à la zone à dépression de la tuyère éjecteur (6) et qui communique le compartiment contenant un gaz oxygénifère.

2. Appareil suivant la revendication 1, caractérisé en ce que le tube enfichable (12) déborde la sortie (13) de la tuyère par 0,4 jusqu'à 6 fois le diamètre de la tuyère.

3. Appareil suivant la revendication 1 ou 2, caractérisé en ce que la relation du diamètre de l'enveloppe extérieure (1) à celui du tube directeur (2) d'écoulement est environ 3 : 1 jusqu'à 5 : 1.

4. Appareil suivant une des revendications 1 à 3, caractérisé en ce que le niveau du liquide (5) est disposé dans une hauteur correspondant au diamètre du tube directeur (2) d'écoulement au-dessus de l'extrémité supérieure de celui-ci, et que le compartiment collecteur (11) du gaz étant disposé au-dessus du niveau du liquide (5) pour les hydrocarbures facilement volatiles présente au moins une hauteur correspondant au demi-diamètre de l'enveloppe extérieure.

5. Appareil suivant une des revendications 1 à 4, caractérisé en ce que le compartiment collecteur (11) du gaz est en option raccordable sur une conduite fermable au tube enfichable (12) de la tuyère éjecteur (6).

6. Appareil suivant une des revendications 1 à 5, caractérisé en ce que, dans le cas d'un montage en série de plusieurs réacteurs, les compartiments collecteurs (11) du gaz de ceux-ci communiquent l'un à l'autre sur une conduite de compensation fermable.

7. Appareil suivant une des revendications 1 à 6, caractérisé en ce qu'un filtre (14) pour l'absorption de gaz polluants est intercalé en arrière du compartiment collecteur (11) du gaz.

8. Appareil suivant une des revendications 1 à 7, caractérisé en ce que dans le compartiment collecteur du gaz, un dispositif pour l'absorption de gaz polluants est arrangé.

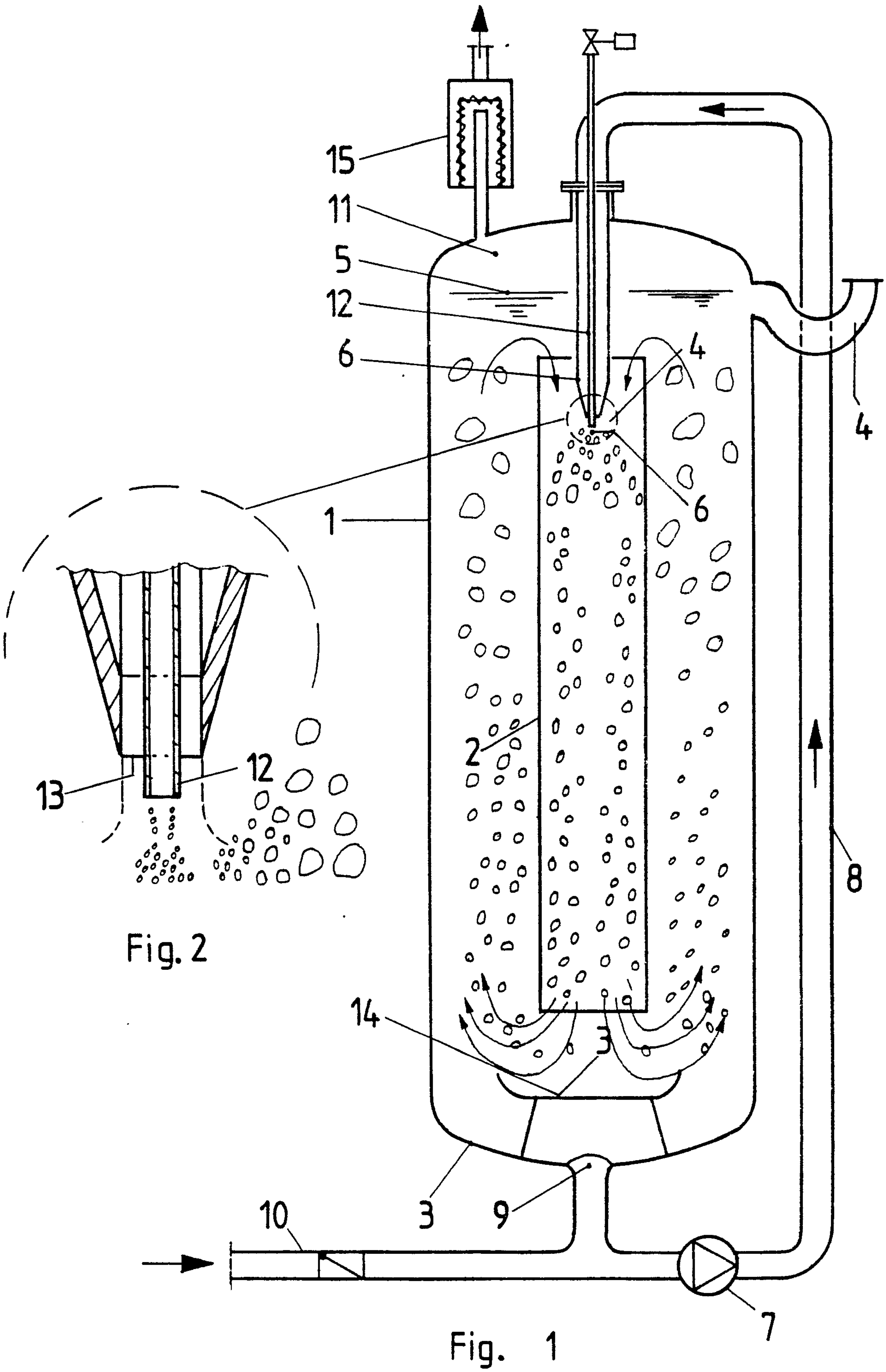


Fig. 2

Fig. 1

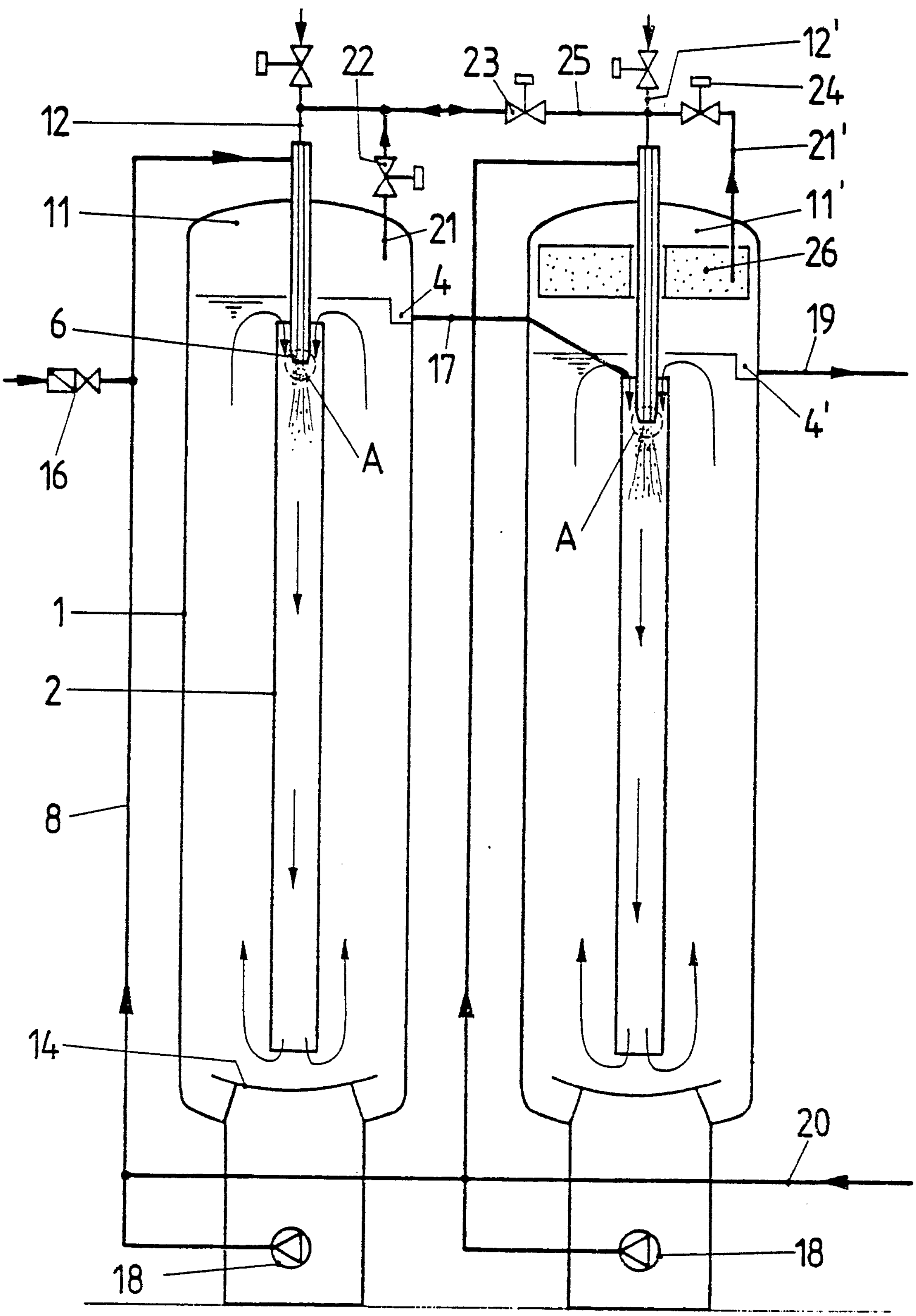


Fig. 3